# EUROPEAN PATENT APPLICATION

(11) **EP 2 785 110 A1**
(43) Date of publication of application: **01.10.2014**
(21) Application number: 12846204.1
(22) Date of filing: 26.10.2012
(51) Int. Cl.: H04W 48/02, H04W 16/08, H04W 52/02

(54) **MOBILE COMMUNICATION METHOD AND WIRELESS BASE STATION**

(30) Priority: 02.11.2011 JP 2011241339
(71) Applicant: NTT Docomo, Inc., Tokyo 100-6150 (JP)
(72) Inventor: AOYAGI, Kenichiro, Tokyo 100-6150 (JP); HAPSARI, Wuri Andarmawanti, Tokyo 100-6150 (JP); KIYOSHIMA, Kohei, Tokyo 100-6150 (JP)
(74) Representative: HOFFMANN EITLE
(86) International application number: PCT/JP2012/077699
(87) International publication number: WO 2013/065590

(57) **Abstract**

The present invention enables to stop communication in a particular cell without having an impact on a mobile station UE being in a standby state. A mobile communication method according to the present invention includes a step A in which a radio base station eNB#A leads a mobile station UE being in a standby state in a cell A, which is covered by the radio base station eNB#A, to be in a standby state in a complementing cell (cells B to G) which complements coverage of the cell A, and a step B in which the radio base station eNB#A stops communication in the cell A.

## Description

### Technical Field

The present invention relates to a mobile communication method and a radio base station.

### Background Art

In a conventional mobile communication system, it has been assumed that communication in a particular cell (an energy-saving target cell) is stopped (Switch OFF) aiming to save energy.

### Citation List

### Non-Patent Document

Non-Patent Document 1: 3GPP TS36.300 V10.5.0

### Summary of Invention

However, there has been a problem that, when communication in an energy-saving target cell is stopped as described above, a mobile station UE being in a standby state in the energy-saving target cell temporarily displays "out of service" and cannot respond a call addressed to the mobile station UE (in other words, cannot receive paging signals) until a cell selection process (Cell Selection) is completed.

The present invention is made in view of the above problem and has an object to provide a mobile communication method and a radio base station that can stop communication in a particular cell without having an impact on a mobile station UE being in a standby state.

A first aspect of the present invention is a mobile communication method including a step A in which a radio base station leads a mobile station being in a standby state in an energy-saving target cell, which is covered by the radio base station, to be in a standby state in a complementing cell which complements coverage of the energy-saving target cell, and a step B in which the radio base station stops communication in the energy-saving target cell.

A second aspect of the present invention is a radio base station including a control unit configured to lead a mobile station being in a standby state in an energy-saving target cell, which is covered by the radio base station, to be in a standby state in a complementing cell which complements coverage of the energy-saving target cell, and stop communication in the energy-saving target cell.

### Brief Description of Drawings

Figs. 1(a) and 1(b) are overall configuration diagrams of a mobile communication system according to a first embodiment of the present invention.
Fig. 2 is a functional block diagram illustrating a radio base station according to the first embodiment of the present invention.
Fig. 3 is a sequence diagram illustrating operation of the mobile communication system according to the first embodiment of the present invention.

### Description of Embodiments

### (Mobile communication system according to first embodiment of the present invention)

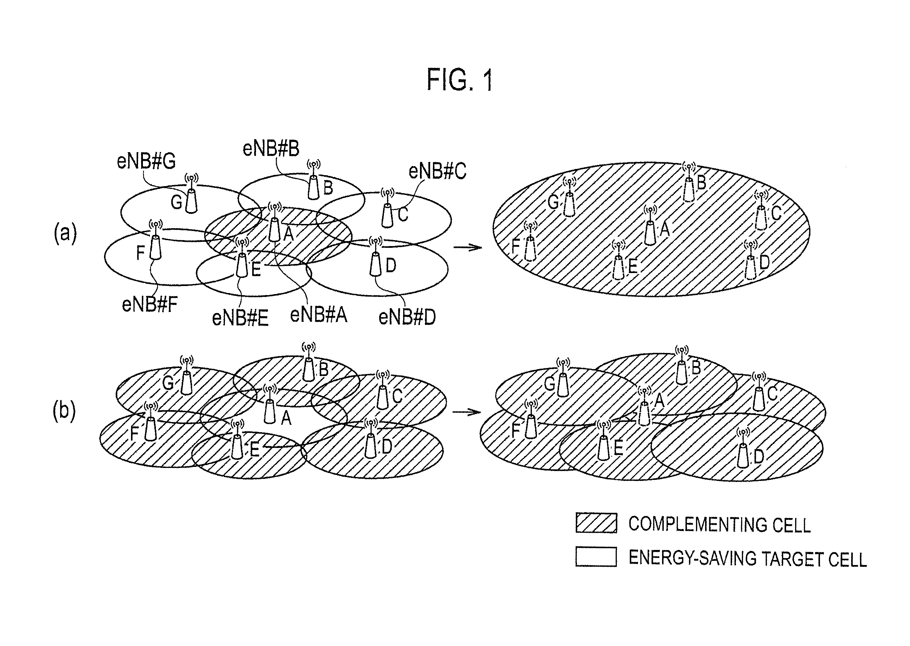

Referring to Figs. 1 to 3, a mobile communication system according to a first embodiment of the present invention will be explained. Duplicative explanation will be omitted by applying same reference numerals to components having the same function in all the figures used to explain the present embodiment.

In the present embodiment, a mobile communication system using an LTE (Long Term Evolution) method will be explained as an example; however, the present invention is not limited to this example case and may also be applied to mobile communication systems using other methods.

Further, the present invention can be applied to a case that later described energy-saving target cell and complementing cell cover different RATs (Radio Access Technology) (Inter-RAT).

As illustrated in Figs. 1(a) and 1(b), the mobile communication system according to the present embodiment includes a radio base station eNB#A which manages a cell A, a radio base station eNB#B which manages a cell B, a radio base station eNB#C which manage a cell C, a radio base station eNB#D which manages a cell D, a radio base station eNB#E which manages a cell E, a radio base station eNB#F which manages a cell F, and a radio base station eNB#G which manages a cell G.

Here, the cells A to G may be in the same frequency band, may be in different frequency bands, or may be in different mobile communication systems.

In the case of Fig. 1(a), communication in the cells B to G is stopped and coverage of the cell A is expanded so as to complement coverage of the cells B to G. In this case, the cells B to G are referred to as "energy-saving target cells" and the cell A is referred to as a "complementing cell."

On the other hand, in the case of Fig. 1(b), communication in the cell A is stopped and the coverage of the cells B to G is expanded so as to complement the coverage of the cell A. In this case, the cell A is referred to as an "energy-saving target cell" and the cells B to G are referred to as "complementing cells."

In the case of Fig. 1(a), the radio base stations eNB#B to eNB#G are composed to stop communication in the cells B to G, after leading a mobile station UE being in a standby state in the cells B to G (energy-saving target cells), which are covered by the radio base stations eNB#B to eNB#G, to be in a standby state in the cell A (complementing cell).

Here, the cell A may be previously expanded or may be expanded upon receiving an instruction signal from a given device.

In the case of Fig. 1(b), the radio base station eNB#A is composed to stop communication in the cell A after leading a mobile station UE being in a standby state in the cell A (energy-saving target cell), which is covered by the radio base station eNB#A, to be in a standby state in one of the cells B to G (complementing cells).

Here, the cells B to G may be previously expanded or may be expanded upon receiving an instruction signal from a given device.

Since the mobile communication system according to the present embodiment operates the same in both cases of Figs. 1(a) and 1(b), the following explanation will be made using the case of Fig. 1(b) as an example.

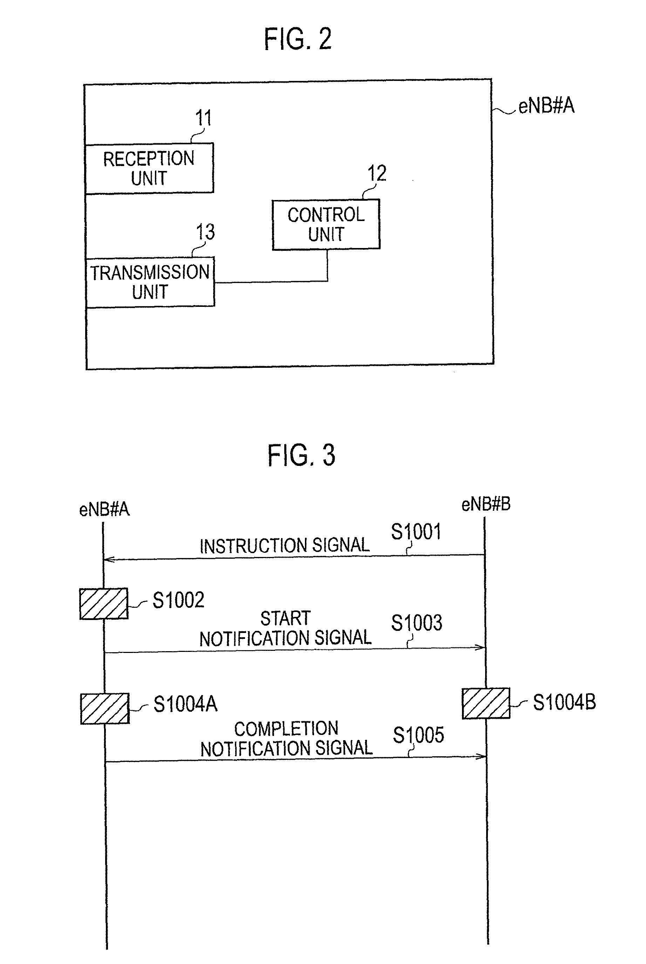

As illustrated in Fig. 2, the radio base station eNB#A includes a reception unit 11, a control unit 12, and a transmission unit 13. Note that the radio base stations eNB#B to eNB#G also include the same features.

The reception unit 11 is composed to receive various signals from a given device, which is, for example, one or more radio base stations eNB of the near radio base stations eNB#B to #G, a core network device (for example, a mobile management node MME or a gateway device S/P-GW), an OAM (Operation And Maintenance) device, and the like.

For example, the reception unit 11 is composed to receive, from the given device, an instruction signal which instructs to stop communication in the energy-saving target cell (cell A).

Here, the energy-saving target cell may be determined in advance or may be specified by the instruction signal.

The control unit 12 is composed to lead the mobile station UE being in a standby state in an energy-saving target cell (cell A) to be in a standby state in a complementing cell (cells B to G) and execute a process to stop communication in the energy-saving target cell (cell A).

Concretely, the control unit 12 is composed to determine whether the coverage of the energy-saving target cell (cell A) is being complemented by the coverage of the complementing cells (cells B to G) according to the reception of the instruction signal by the reception unit 11.

Here, the control unit 12 may be composed to perform the determination based on previously-set information (for example, a flag which indicates whether the complementation is being performed, etc.), may be composed to perform the determination by measuring a wireless signal quality or the like in the complementing cell (cells B to G), or may be composed to perform the determination based on information from the given device.

Here, in a case that it is determined that the coverage of the energy-saving target cell (cell A) is being complemented by the coverage of the complementing cell (cells B to G), the control unit 12 is composed to instruct the transmission unit 13 to transmit a start notification signal which notifies that the communication in the energy-saving target cell (cell A) is going to be stopped to the given device, and lead the mobile station UE being in a standby state in the energy-saving target cell (cell A) to be in a standby state in the complementing cell

(cells B to G) before stopping the communication in the energy-saving target cell (cell A).

Here, the start notification signal may notify the start of the above described lead process.

For example, the control unit 12 may be composed to perform the leading based on broadcast information regarding the cell A.

Concretely, in such a case, in the broadcast information, the control unit 12 may set access restriction information (for example, "Cell Barred") which restricts access to the energy-saving target cell (cell A), or may set a parameter (for example, "Neighboring Cell List," "Priority," etc.) used in a cell selection process so that the energy-saving target cell (cell A) is hardly selected.

Further, the control unit 12 may set the parameter (for example, "Neighboring Cell List, " "Priority, " etc.) used in the cell selection process so that the energy-saving target cell (cell A) is hardly selected after the mobile station UE selects the complementing cell (cells B to G).

This can prevent the mobile station UE being in a standby state in the energy-saving target cell (cell A) from being in a condition of displaying "out of service" and being unable to respond incoming calls addressed to the mobile station UE (in other word, being unable to receive paging signals), and the complementing cell (cells B to G) can be selected.

The control unit 12 is composed to stop communication in the energy-saving target cell (cell A) after the lead process is completed.

Further, when the lead process is completed, the control unit 12 instructs the transmission unit 13 to transmit a completion notification signal to notify the completion. Here, the completion notification signal may notify that the process to stop communication in the energy-saving target cell (cell A) is completed.

Here, the control unit 12 may be composed to stop communication in the energy-saving target cell (cell A) after the transmission of the completion notification signal by the transmission unit 13 is completed.

Further, the control unit 12 may lead the mobile station UE being in a connecting state in the energy-saving target cell (cell A) to be in a standby state in the complementing cell (cells B to G).

Here, the control unit 12 may instruct the transmission unit 13 to transmit, to a given device, the start notification signal, which notifies that communication in the energy-saving target cell (cell A) is going to be stopped, without performing the above described determination.

In this case, in response to the start notification signal, the given device may perform wireless tuning which is necessary to complement the coverage of the energy-saving target cell (cell A).

Or, in this case, in response to the start notification signal, the given device may restrict a handover process and a redirection process from the complementing cell (cells B to G) to the energy-saving target cell (cell A).

Further, in response to the start notification signal, the given device may make a setting so as not to lead the mobile station UE being in a standby state in the complementing cell (cells B to G) to be in a standby state in the cell A, based on the broadcast information.

The transmission unit 13 is composed to transmit, to the given device, the start notification signal, the completion notification signal and the like according to the instruction from the control unit 12.

Hereinafter, with reference to Fig. 3, an example of an operation of the mobile communication system according to the present embodiment will be explained.

As illustrated in Fig. 3, in step S1001, a given device, which is the radio base station eNB#B in the example of Fig. 3, transmits, to the radio base station eNB#A, an instruction signal which instructs to stop communication in the energy-saving target cell (cell A).

When it is determined that the coverage of the energy-saving target cell (cell A) is being complemented by the coverage of the complementing cell (cells B to G) in step S1002, the radio base station eNB#A transmits, to the radio base station eNB#B, a start notification signal which notifies that the communication in the energy-saving target cell (cell A) is going to be stopped in step S1003

In step S1004A, using the broadcast information regarding the energy-saving target cell (cell A), the radio base station eNB#A leads the mobile station UE being in a standby state in the energy-saving target cell (cell A) to be in a standby state in the complementing cell (cell B) before stopping the communication in the energy-saving target cell (cell A).

On the other hand, in step S1004B, the radio base station eNB#B restricts a handover process and a redirection process from the complementing cell (cell B) to the energy-saving target cell (cell A).

In step S1005, the radio base station eNB#A transmits, to the radio base station eNB#B, a completion notification signal which notifies that the lead process is completed, and stops communication in the energy-saving target cell (cell A).

Here, the radio base station eNB#A may transmit the completion notification signal after stopping the communication in the energy-saving target cell (cell A).

According to the mobile communication system of the first embodiment of the present invention, the radio base station eNB#A can lead the mobile station UE being in a standby state in the energy-saving target cell to be in a standby state in the complementing cell (cells B to G) before stopping communication in the energy-saving target cell (cell A). This prevents a condition that the mobile station UE cannot respond to calls addressed to the mobile station UE (in other words, cannot receive paging signals) due to a temporal "out of service" display when the communication in the energy-saving target cell (cell A) is stopped.

The above described aspects of the present embodiment may also be expressed as follows.

A first aspect of the present embodiment is a mobile communication method including a step A in which a radio base station eNB#A leads a mobile station UE being in a standby state in a cell A (an energy-saving target cell), which is covered by the radio base station eNB#A, to be in a standby state in a complementing cell (cells B to G) complementing coverage of the cell A, and a step B in which the radio base station eNB#A stops communication in the cell A.

Regarding the first aspect of the present embodiment, in step A, the radio base station eNB#A may perform the leading based on broadcast information regarding the cell A.

Regarding the first aspect of the present embodiment, in step A, the broadcast information may include access restriction information which restricts access to the cell A.

Regarding the first aspect of the present embodiment, in step A, the radio base station eNB#A may lead the mobile station UE being in a connecting state in the cell A to be in a standby state in the complementing cell (cells B to G).

Regarding the first aspect of the present embodiment, the radio base station eNB#A may transmit, to a given device (for example, radio base stations eNB#B to eNB#G, a core network device, an OAM device and the like), a start notification signal which notifies that the leading starts.

Regarding the first aspect of the present embodiment, the given device may perform wireless tuning which is necessary to complement the coverage of the cell A in response to the start notification signal.

Regarding the first aspect of the present embodiment, the given device may restrict a handover process and a redirection process from the complementing cell (cells B to G) to the cell A in response to the start notification signal.

Regarding the first aspect of the present embodiment, the given device may make a setting so as not to lead the mobile station UE being in a standby state in the complementing cell (cells B to G) to be in a standby state in the cell A based on the broadcast information, in response to the start notification signal.

Regarding the first aspect of the present embodiment, in step A, the radio base station eNB#A may start the leading in response to the instruction signal from the given device.

Regarding the first aspect of the present embodiment, the radio base station eNB#A may transmit, to the given device, a completion notification signal which notifies that the leading is completed.

A second aspect of the present embodiment is a radio base station eNB including a control unit 12 configured to lead a mobile station UE being in a standby state in a cell A, which is covered by the radio base station eNB, to be in a standby state in a complementing cell (cells B to G) which complements coverage of the cell A, and stop communication in the cell A.

Here, operation of the radio base station eNB and the mobile station UE may be carried out by hardware, may be carried out by a software module executed by a processor, or may be carried out with a combination of the above.

The software module may be provided in a storage medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, and a CD-ROM.

The storage medium is connected to the processor so that the processor can read and write information in the storage medium. Further, the storage medium may be integrated in the processor. Further, the storage medium and the processor may be provided in an ASIC. Further, the ASIC may be provided in the radio base station eNB or the mobile station UE. Further, the storage medium and the processor may be provided, as discrete components, in the radio base station eNB and the mobile station UE.

The present invention has been explained using the above embodiment; however, it is obvious for those skilled in the art that the present invention is not limited to the embodiment explained in this specification. The present invention may be realized in a modified and changed manner within effect and scope of the present invention, which are defined by descriptions of the claims. Therefore, the description of this specification is made aiming to explain examples and does not have any significance to limit the present invention.

Here, the entire content of Japanese Patent Application No. 2011-241339 (filed on November 2, 2011) is included in this specification by referring thereto.

### Industrial Applicability

As described above, according to the present invention, there can be provided a mobile communication method and a radio base station which can stop communication in a particular cell without having an impact on a mobile station UE being in a standby state.

### Reference Signs List

- UE: mobile station
- eNB: radio base station
- 11: reception unit
- 12: transmission unit
- 13: control unit

## Claims

1. A mobile communication method comprising:
a step A in which a radio base station leads a mobile station being in a standby state in an energy-saving target cell, which is covered by the radio base station, to be in a standby state in a complementing cell complementing coverage of the energy-saving target cell, and
a step B in which the radio base station stops communication in the energy-saving target cell.

2. The mobile communication method according to claim 1, wherein
in the step A, the radio base station performs the leading based on broadcast information regarding the energy-saving target cell.

3. The mobile communication method according to claim 2, wherein
in the step A, the broadcast information includes access restriction information which restricts access to the energy-saving target cell.

4. The mobile communication method according to claim 1, wherein
in the step A, the radio base station leads the mobile station being in a connecting state in the energy-saving target cell to be in a standby state in the complementing cell.

5. The mobile communication method according to claim 1, wherein
the radio base station transmits, to a given device, a start notification signal which notifies that the leading starts.

6. The mobile communication method according to claim 5, wherein
the given device performs wireless tuning which is necessary to complement the coverage of the energy-saving target cell in response to the start notification signal.

7. The mobile communication method according to claim 5, wherein
the given device restricts a handover process and a redirection process from the complementing cell to the energy-saving target cell in response to the start notification signal.

8. The mobile communication method according to claim 5, wherein
the given device makes a setting so as not to lead the mobile station being in a standby state in the complementing cell to be in a standby state in the energy-saving target cell based on the broadcast information, in response to the start notification signal.

9. The mobile communication method according to claim 1, wherein
in the step A, the radio base station starts the leading in response to an instruction signal from a given device.

10. The mobile communication method according to claim 1, wherein
the radio base station transmits, to a given device, a completion notification signal which notifies that the leading is completed.

11. A radio base station comprising:
a control unit configured to lead a mobile station being in a standby state in an energy-saving target cell, which is covered by the radio base station, to be in a standby state in a complementing cell which complements coverage of the energy-saving target cell, and stop communication in the energy-saving target cell.
